# EUROPEAN PATENT SPECIFICATION

(11) **EP 2 999 177 B1**
(45) Date of publication and mention of the grant of the patent: **28.11.2018**
(21) Application number: 14184925.7
(22) Date of filing: 16.09.2014
(51) Int. Cl.: H04L 12/857, H04L 12/801, H04L 12/851, H04L 12/813

(54) **Method and system for QoS-based WebRTC access to an evolved packet system (EPS) network infrastructure**
Verfahren und System für QoS-basierten WebRTC-Zugang zu einer entwickelten Paketsystemnetzwerkinfrastruktur
Procédé et système pour un accès WebRTC à base QoD sur une infrastructure de réseau de système par paquets évolué (EPS)

(43) Date of publication of application: 23.03.2016
(73) Proprietor: Deutsche Telekom AG, 53113 Bonn (DE)
(72) Inventor: Hänsge, Kay, 10785 Berlin (DE); Einsiedler, Hans Joachim, 13189 Berlin (DE); Maruschke, Michael, 04275 Leipzig (DE); Baumgart, Matthias, 18147 Rostock (DE)
(74) Representative: Vossius & Partner Patentanwälte Rechtsanwälte mbB

(56) References cited:
- US-A1- 2014 219 167
- US-A1- 2014 222 963
- "3rd Generation Partnership Project;Technical Specification Group Services and System Aspects;IP Multimedia Subsystem (IMS);Stage 2(Release 12)", 3GPP , 24 June 2014 (2014-06-24), pages 1-310, XP050872383, Retrieved from the Internet: URL:http://www.3gpp.org/ftp/Specs/archive/ 23_series/23.228/23228-c50.zip [retrieved on 2015-02-19]

## Description

The present invention relates to support Quality of Service (QoS) using Web Real Time Communication (WebRTC) based clients integrated in mobile devices conformed to 3GPP Release 8 Public Land Mobile Network (PLMN) infrastructure. The IP Multimedia Subsystem (IMS) is an integrated part inside the 3GPP Release 8 network architecture as a session control layer.

A new upcoming framework named WebRTC enriches ordinary web browsers with real-time communication functions offering High-Definition (HD) audio and video exchange bidirectionally, without any further installation of plugins or applications. It is based on the Hypertext Markup Language in Version 5 (HTML5).

WebRTC is an open project initiated by Google Incorporated and is still under development and in the standardization process. The World Wide Web Consortium (W3C) is responsible for the web developer Application Programming Interface (API) and the Internet Engineering Task Force (IETF) for all corresponding protocols in an active working group named "Real-Time Communication in WEB-browsers - RTCweb" [1].

Current relevant standard documents are the W3C working draft "WebRTC 1.0: Real-time communication between browsers" [2] and also the IETF draft "Real Time Protocols for Browser-based Applications" [3].

WebRTC does not define any particular signaling protocol. That is why developers can choose the most appropriate protocol for their special use case. So it is possible to do a fast implementation of new communication features.

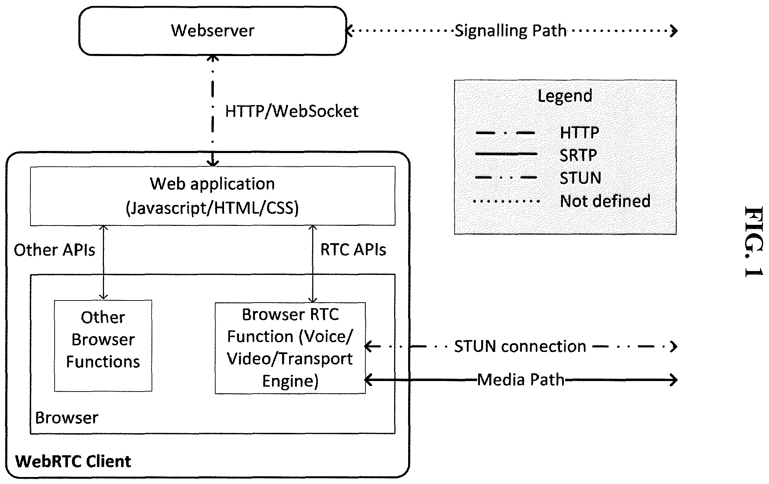

The generic architecture of a WebRTC Client with its components and interfaces is described in **Fig. 1** based on [3].

The basic components in the figure can be described as follows:
- *Webserver* provides the client's web application and includes a server component to handle the signaling traffic.
- *Browser* is a generic web browser which is capable of the general (Other) Browser Functions as well as the *Browser RTC Function.*
- *Web application* is executed by the *Browser*. The Web application makes use of the integrated *Browser RTC Function* via the RCT APIs.
- *Browser RTC Function* is the WebRTC component that provides Voice, Video and Transport Engines.
- *Signaling Path* is the communication channel used to transport the signaling information between the participating entities.
- *Media Path* is the communication channel used to transport the payload data. It provides secure encrypted connection between the endpoints by using SRTP.
- *Session Traversal Utilities for NAT (STUN) Connection* is used to connect to a STUN server in order to bypass NAT restrictions.

For running a WebRTC client successfully, a capable web browser with Browser RTC functionality may be used. Currently, web browsers like Google Chrome, Mozilla Firefox, and Opera provide this component by default.

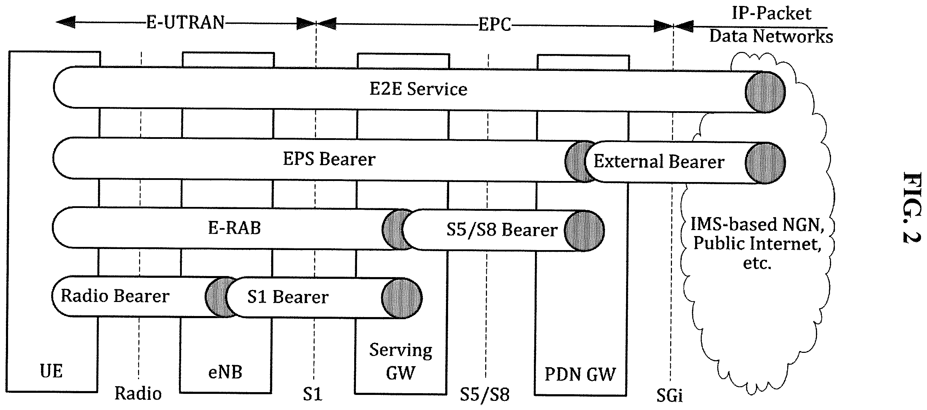

Since 3GPP Release 8, Public Land Mobile Networks (PLMN) are characterized by using an architecture approach named Evolved Packet System (EPS). The EPS includes the User Equipment (UE), the evolved UMTS Terrestrial Radio Access Network (E-UTRAN) with its Long Term Evolution (LTE) based radio access technology and the Evolved Packet Core (EPC) with its core components named Serving Gateway (SGW), Packet Data Network Gateway (PDN GW), Mobility Management Entity (MME), and Home Subscriber Server (HSS) [4]. This system has its own mechanisms for Quality of Service incorporated into the network components, called EPS-Bearer. **Fig. 2**, taken from [5], depicts this EPS Bearer which is correlated with the overall Bearer based End-to-End QoS concept of the 3GPP network infrastructure. The detailed description can be found in [5]. In order to fulfil certain media delivery requirements, the establishment of multiple EPS Bearers for certain purposes is possible. Each EPS Bearer has its own QoS mechanism allowing classification of the data traffic into 9 QoS Class Identifiers (QCI) [6]. On demand of applications, the UE or the network may request and enforce the establishment of a Dedicated Bearer for specific data flows and with a specific QCI [6]. Each QCI has its own Resource-Type, Priority, Packet-Delay-Budget, and Packet-Error-Loss-Rate. Hence, high performance critical applications like conversational voice will be classified with the QCI 1. Another delay and data rate critical application such as conversational video will have QCI 2 etc. Both examples will benefit from a low packet-delay-budget and a guaranteed bit rate on the established channel. Other applications may be classified as background traffic (like E-Mail synchronization) and will be handled with a lower priority QCI such as 7 to 9, which has low resource requirements on the network path.

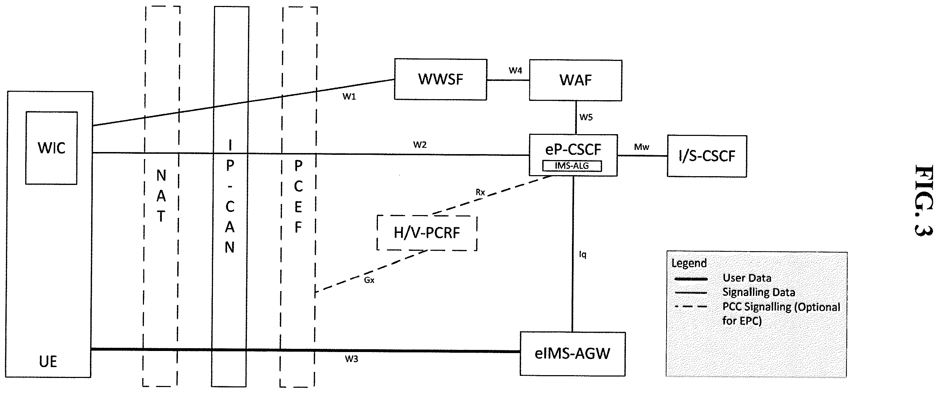

The 3GPP proposes a concept to integrate WebRTC functionality into the already existing overall network architecture. **Fig. 3** shows the Annex U of 3GPP TS 23.228 V12.5.0 [7] which specifies a network-based architecture to support WebRTC clients accessing the IMS network. The basic components in the figure can be described as follow:
- *User Equipment (UE)* includes the end user device with all relevant hardware components, the operation system, media endpoints (microphone, camera, etc.) and the WebRTC Function in the Web browser.
- *WebRTC IMS Client (WIC)* is an application using the WebRTC extensions in the browser and can interoperate with the IMS access architecture.
- *Proxy Call Session Control Function (P-CSCF) enhanced for WebRTC (eP-CSCF)* is a P-CSCF including the IMS Application Layer Gateway Function (IMS-ALG) with the additionally functions of signaling gateway (to interoperate IMS-Signalling with WebRTC Signalling), the control function for the media plane and optionally to interwork for user authorization with the *WebRTC Authorisation Function (WAF).*
- *IMS Access GateWay enhanced for WebRTC (eIMS-AGW)* acts as a standard IMS-AGW, enriched with all necessary media plane interworking tasks (Real-Time Transport Protocol/ Secure Real-time Transport Protocol - RTP/SRTP - mapping; Network Address Translation - NAT - traversal mechanisms; media codec transcoding, etc.)
- *WebRTC Web Server Function (WWSF)* provides the Java Script WIC application which is executed inside the Web Browser. Additionally, the WWSF can be used for Web based authentication of the WIC.
- *WebRTC Authorisation Function (WAF)* provides authorisation tokens to the WWSF.
- Other 3GPP IMS standard conform entities/network elements like *Network Address Translation (NAT), IP-Connectivity Access Network (IP-CAN), Policy Control Enforcement Function (PCEF), Home-*/*Visited Policy and Charging Rules Function (H*/*V-PCRF)*, *Interrogating*/*Serving Call Session Control Function (I*/*S-CSCF)* remain untouched.

Regarding the ensuring of a full end to end QoS support for a WebRTC clients connected to an IMS network, the 3GPP proposal [7] describes only, that end to end QoS support can be provided. However, any definite method or mechanism for this is missing. The current invention fills this gap.

Typically, for multimedia-based sessions in IMS networks, the QoS is negotiated and established before the user data will be exchanged. In contrast to this, the WebRTC framework uses several candidate pairs for the intended communication, so called Interactive Connectivity Establishment (ICE) candidates. Hence, the involved entities (WebRTC Clients and network elements like eIMS-AGW) do not know the used ICE candidate pairs for the media path before the communication itself is established. Therefore, it makes no sense to reserve QoS resources from the network side before the active user data exchange phase is started. The current invention will also overcome this issue.

An IETF-Draft proposes a QoS mechanism at the WebRTC client side using Differentiated Service Code Points (DSCP) [8]. However, if the real-time packet is transmitted towards a QoS capable network domain, a QoS class mapping is needed. This draft does not cover any mapping processes for the already integrated QoS management inside an EPS with its QCI values. Also, the draft considers only client side marking of IP packets and does not take care about the QoS interoperability over the whole network infrastructure. However, client side marking of IP packets is also a topic for the admission control processes. The issue is, if the marking is allowed and the network enforces the requested QoS parameters, other (unwanted) applications may also request prioritized forwarding. This situation may lead to overall high prioritized traffic with no benefit for the actual intended application. Therefore the authorization of client-side requested QoS needs to be clarified. Our invention will also overcome this issue by enabling provider-based QoS enforcement via a separate signalling path.

The present invention provides a method and system enforcing QoS characteristics during an active WebRTC conversation which is established by using an EPS mobile core network as well as a IMS core for signalling.

The invention reuses the standardized EPS architecture as well as the new proposed integration of WebRTC clients into the IMS network [7]. In this invention, the WebRTC Client acts as a User Equipment (UE) entity that provides QoS awareness. It allows requesting QoS characteristics during the active conversation phase. With the help of transmission of the status information (periodical and event-based) for each established media connection, it is possible to use the EPS QoS resources dynamically.

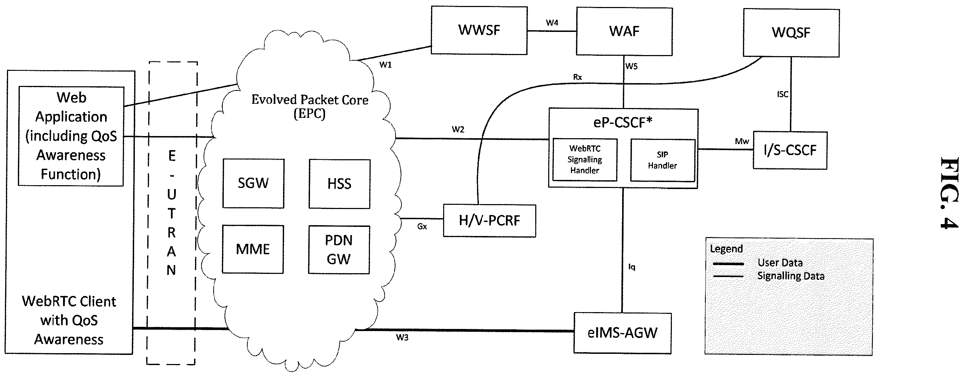

This invention introduces a new architecture (depicted in **Fig. 4**), based on [7] (Section Annex U) including the new entities named WebRTC Client with QoS Awareness, WebRTC QoS Signaling Function (WQSF) and an eP-CSCF*, which is a modified eP-CSCF.

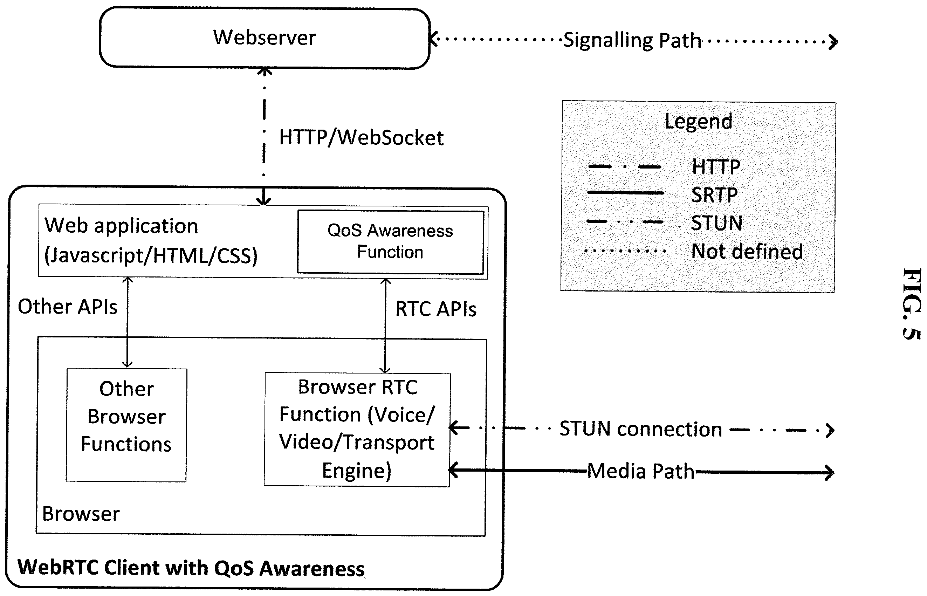

The *WebRTC Client with QoS Awareness* receives this additional feature by executing the WebRTC JavaScript Application with QoS Awareness functionality from the WebRTC Web Service Function (WWSF). QoS Awareness on the application means that a periodical and event-based examination of the established and used media channels provides all necessary information (e.g. media type, media quality, IP flow information, data rate, delay etc.) inside the client's application. This will be sent over the W2 interface for further processing on the network side. The QoS Awareness Function is added into the client's web application as shown in **Fig. 5**.

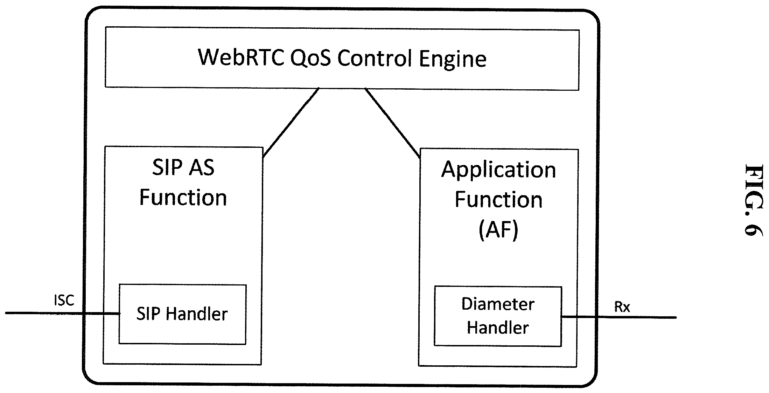

The *WebRTC QoS Signaling Function (WQSF)* acts as a Session Initiation Protocol Application Server (SIP AS) with an embedded Application Function (AF) which offers the application to require Policy and Charging Control (PCC) on the network side. The internal architecture of the proposed WQSF is depicted in **Fig. 6**. The WebRTC QoS Control Engine is responsible for the control of the SIP AS Function and the AF and their embedded protocol handlers. It assigns the signaling messages towards the adequate signalling protocol functions and it performs parsing, validation, and authorization of the related QoS and charging control messages. Such messages are sent to the Home/Visiting Policy and Charging Rules Function (H/V-PCRF). The Rx interface based messages are parsed, validated, and checked with its internal policies. If matching criteria are resulting positive, the corresponding pre-defined QoS enforcement rule will be pushed into the EPS. Our invention covers the adequate mapping of the used multimedia channel information into standardised Diameter Rx requests. Furthermore, our invention covers the mapping rules for setting up feasible Dedicated EPS Bearer regarding the incoming Diameter request. Such mapping rules are:
- WebRTC-based Audio streams are related to QCI 1,
- WebRTC-based Video streams are related to QCI 2 (Conversational) or QCI 4 (Non-Conversational),
- WebRTC-based Real-Time Gaming is related to QCI 3,
- WebRTC-based Data streams are related to QCI 5-9.
The new defined *eP-CSCF** in Fig. 4 additionally handles all QoS relevant information of the established WebRTC conversation. During an established conversation, all relevant session and media related QoS relevant information (e.g. used general session identifier, account names, logical transport addresses and ports, media type, data rate etc.) is received by the eP-CSCF* and is mapped into adequate SIP signaling messages towards the IMS core components.
The present invention is defined by the independent claims. Dependent claims refer to preferred embodiments.
The invention provides a method and system to enforce Quality of Service, QoS, for IMS-based Web Real Time Communication, WebRTC, in an evolved packet system network, the method comprising:
a) a Web Application that includes quality of service awareness by periodic- and event-based analysis of QoS relevant active session statistics,
b) an eP-CSCF* that is a modified eP-CSCF which maps the QoS relevant information mapped into adequate Session Initiation Protocol, SIP, signalling messages towards the IP Multimedia Subsystem, IMS, core components, and
c) a WebRTC QoS Signalling Function, WQSF, that acts as a Session Initiation Protocol Application Server, SIP AS, with an embedded Application Function, AF, which offers the application to require Policy and Charging Control, PCC, on the network side,
d) the mapping rules for setting up feasible Dedicated EPS Bearer classes for audio streams, video streams, and data streams are:
   i. WebRTC-based Audio streams are related to QoS Class Identifiers, QCI, 1,
   ii. WebRTC-based Video streams are related to QCI 2 (Conversational) or QCI 4 (Non-Conversational),
   iii. WebRTC-based Real-Time Gaming is related to QCI 3,
   iv. WebRTC-based Data streams are related to QCI 5-9.

Preferably, one end-point of the communication path is a multipoint control unit, MCU, that enables QoS based communication to multiple WebRTC enabled User Equipments, UEs.

More preferably, the multiple communication unit, MCU, also enables QoS based communication to non WebRTC clients by transcoding the content appropriately.

According to an aspect, other than the described mapping rules according to item (d) above are used.

The present invention is described in more detail in the following with reference to the Figures, wherein:
- **Fig. 1**: is illustrating the basic components of a typical WebRTC Client and its connections to other network components, based on [3].
- **Fig. 2**: illustrates the standardized EPS Bearer Concept with the naming of the sub Bearer, based on [5].
- **Fig. 3**: shows the standardized network-based architecture to support WebRTC clients into existing IMS architecture, based on [7].
- **Fig. 4**: illustrates the architecture according to the invention, based on Fig. 3. It shows that the access network is the EPS (E-UTRAN and EPC). Furthermore, the WebRTC QoS Signaling Function is acting as a SIP Application Server, connected to the IMS core component S-CSCF.
- **Fig. 5**: is illustrating the basic components of a typical WebRTC Client enhanced with the QoS Awareness functionality.
- **Fig. 6**: illustrates the internal components and connections of the proposed WebRTC QoS Signaling Function (WQSF).
- **Fig. 7**: shows a sequence chart of the example use case, which is described in the description of invention.

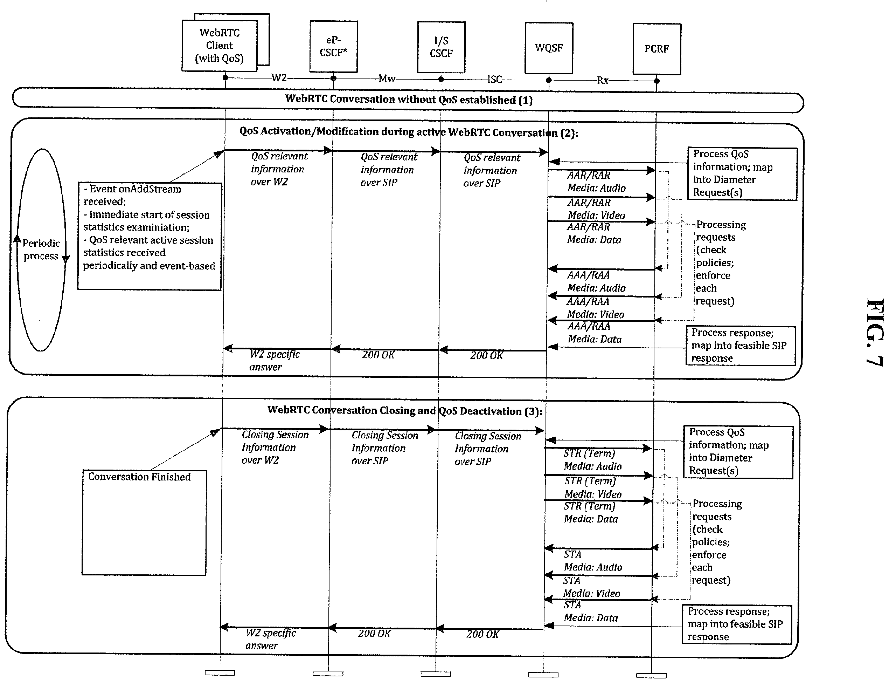

To understand the presented invention, a simplified sequence chart (see **Fig. 7**) shows the QoS resource request to benefit from the QoS enforcement inside the network, initially triggered by the WebRTC application. For this use case, the assumption has to be made, that the WebRTC client is already authenticated, authorized and hence attached at the network and web service level, and wants to start a WebRTC call (with conversational voice, conversational video and data channel for file transfer) to another participant.

The use case can be described with the following sequences related to *Fig. 7*:
- Sequence A) shows the WebRTC conversation establishment phase where a WebRTC peer is starting a conversation with another WebRTC peer. All relevant session information such as security keys, candidates for addressing issues etc. are covered in here but will not be described further. The first sequence is finished at this point. The establishment of the QoS characteristics will be processed in Sequence B.
- Sequence B) depicts the actual QoS awareness of the WebRTC application as well as the information sending process towards the introduced WQSF. Immediately after starting the real-time data exchange (at least one media channel is established), the initial examination of the established media channel is started. Inside the WebRTC application, the examination unit of the WebRTC QoS Awareness Function processes QoS relevant active session status information from each media channel and stores the conversation's session information. Based on the browser's event system, the QoS Awareness function reacts also on media streams which are added or removed during the active conversation and performs accordingly. A message including all the QoS relevant information will then be transferred over the W2 reference point towards the eP-CSCF*. This function maps the QoS relevant information into a feasible IMS-specific SIP Request message and forwards it to the core components I/S-CSCF. The core components are processing the request and forward it towards the WQSF. Relevant QoS information inside the request is parsed and validated at the WQSF. For each flow and media type, the WQSF performs a mapping of the conversation flow with its particular media type into a feasible Diameter message and requests the QoS treatment in an Authorise-Authenticate- or Re-Auth-Request (AAR/RAR). The mapping is based on the QCI values (e.g. Audio equals QCI 1, Video equals QCI 2 or 4, Data is depending on the actual application). For each request, the results of the enforcement procedures inside the EPS will be sent as an answer from the PCRF towards the WQSF. Inside the WQSF, the answer is stored and aggregated with other answers, related to that overall request. If all requests are answered successful, the WQSF performs a successful message signalling along the initial way through the IMS components and the eP-CSCF*. The indication of success or failure of this sequence on the client side is optional.

- Sequence C) depicts the finish procedures of the conversation. If the conversation is stopped by one of the WebRTC participants, the QoS Awareness function sends a closing session indication over the W2. This information will be mapped again as a feasible SIP Request and sent through the core components towards the WQSF. The WQSF parses and validates the request and sends out a Diameter-based Session Termination Request for the specific media channel flows to the corresponding PCRF. After processing and answering all correlated Diameter requests to the WQSF, the WQSF performs a successful message signaling along the initial way through the IMS components and the eP-CSCF*. The indication of success or failure of this sequence on the client side is optional.

Other aspects, features, and advantages will be apparent from the summary above, as well as from the description that follows, including the figures and the claims.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

### References

[1] IETF. Rtcweb status pages. http://tools.ietf.org/wg/rtcweb/, Retrieved August, 2014
[2] C. Jennings, A. Narayanan, D. Burnett, and A. Bergkvist, "WebRTC 1.0: Real-time communication between browsers," W3C, W3C Editor's Draft, 01 July 2014, http://dev.w3 .org/2011/webrtc/editor/archives/20140704/webrtc.html, Retrieved August 2014
[3] IETF draft "Real Time Protocols for Browser-based Applications" http://tools.ietf.org/html/draft-ietf-rtcweb-overview-11, Retrieved August 2014,
[4] 3GPP TS 23.002, http://www.3gpp.org/DynaReport/23002.htm, Rel. 8, V. 8.7.0 (2010-12)
[5] 3GPP TS 36.300, http://www.3gpp.org/DynaReport/36300.htm, Rel. 8, V. 12.0 (2010-04)
[6] 3GPP TS 23.203, http://www.3gpp.org/DynaReport/23203.htm, 3GPP TS 23.203, Rel. 8; V8.14.0 (2012-06)
[7] 3GPP TS 23.228, http://www.3gpp.org/DynaReport/23228.htm, V12.5.0 (2014-06), Section Annex U
[8] DSCP and other packet markings for RTCWeb QoS, S. Dhesikan, http://tools.ietf.org/html/draft-dhesikan-tsvwg-rtcweb-qos-07, Retrieved August 2014

## Claims

1. A method to enforce Quality of Service, QoS, for IMS-based Web Real Time Communication, WebRTC, in an evolved packet system network, the method comprising:
a) a Web Application that includes quality of service awareness by periodic- and event-based analysis of QoS relevant active session statistics,
b) an eP-CSCF* that is a modified enhanced Proxy Call Session Control Function, eP-CSCF, which is configured to map the QoS relevant information into adequate Session Initiation Protocol, SIP, signalling messages towards the IP Multimedia Subsystem, IMS, core components, and
c) a WebRTC QoS Signalling Function, WQSF, that acts as a Session Initiation Protocol Application Server, SIP AS, with an embedded Application Function, AF, which offers the application to require Policy and Charging Control, PCC, on the network side,
d) the mapping rules for setting up feasible Dedicated EPS Bearer classes for audio streams, video streams, and data streams are:
i. WebRTC-based Audio streams are related to QoS Class Identifiers, QCI, 1,
ii. WebRTC-based Video streams are related to QCI 2, Conversational, or QCI 4, Non-Conversational,
iii. WebRTC-based Real-Time Gaming is related to QCI 3,
iv. WebRTC-based Data streams are related to QCI 5-9,
wherein the WebRTC conversation is established without establishing QoS, and wherein the QoS is enforced after the WebRTC conversation has been established.

2. The method according to claim 1 wherein one end-point of the communication path is a multipoint control unit, MCU, that enables QoS based communication to multiple WebRTC enabled User Equipments, UEs.

3. The method according to claim 2 in which the multiple communication unit, MCU, also enables QoS based communication to non WebRTC clients by transcoding the content appropriately.

4. A system to enforce Quality of Service, QoS, for IMS-based Web Real Time Communication, WebRTC, in an evolved packet system network, the system comprising:
a) a Web Application that includes quality of service awareness by periodic- and event-based analysis of QoS relevant active session statistics,
b) an eP-CSCF* that is a modified enhanced Proxy Call Session Control Function, eP-CSCF, which is configured to map the QoS relevant information into adequate Session Initiation Protocol, SIP, signalling messages towards the IP Multimedia Subsystem, IMS, core components, and
c) a WebRTC QoS Signalling Function, WQSF, that is configured to act as a Session Initiation Protocol Application Server, SIP AS, with an embedded Application Function, AF, which offers the application to require Policy and Charging Control, PCC, on the network side,
d) the mapping rules for setting up feasible Dedicated EPS Bearer classes for audio streams, video streams, and data streams are:
i. WebRTC-based Audio streams are related to QoS Class Identifiers, QCI, 1,
ii. WebRTC-based Video streams are related to QCI 2, Conversational, or QCI 4, Non-Conversational,
iii. WebRTC-based Real-Time Gaming is related to QCI 3,
iv. WebRTC-based Data streams are related to QCI 5-9,
wherein the WebRTC conversation is established without establishing QoS, and wherein the QoS is enforced after the WebRTC conversation has been established.

5. The system according to claim 4 wherein one end-point of the communication path is a multipoint control unit (MCU) that is configured to enable QoS based communication to multiple WebRTC enabled UEs.

6. The system according to claim 5 in which the multiple communication unit, MCU, is also configured to enable QoS based communication to non WebRTC clients by transcoding the content appropriately.

## Patentansprüche

1. Verfahren, um eine Dienstqualität, QoS, für eine IMS-basierte Web-Echtzeitkommunikation, WebRTC, in einem Evolved Packet System-Netzwerk zu erzwingen, wobei das Verfahren aufweist:
a) eine Web-Anwendung, die durch eine periodische und ereignisbasierte Analyse einer QoS-relevanten Statistik der aktiven Sitzung eine Dienstqualitätskenntnis aufweist,
b) eine eP-CSCF*, die eine modifizierte verbesserte Proxy-Aufrufsitzungssteuerungsfunktion, eP-CSCF, ist, die konfiguriert ist, die QoS-relevanten Informationen in adäquate Sitzungseinleitungsprotokoll-, SIP, Signalisierungsmeldungen an die IP-Multimedia-Subsystem-, IMS, Kernkomponenten abzubilden, und
c) eine WebRTC-QoS-Signalisierungsfunktion, WQSF, die als ein Sitzungseinleitungsprotokoll-Anwendungsserver, SIP AS, mit einer eingebetteten Anwendungsfunktion, AF, dient, die es der Anwendung anbietet, eine Richtlinien- und Vergütungssteuerung, PCC, auf der Netzwerkseite anzufordern,
d) die Abbildungsregelungen zum Aufbauen möglicher dedizierter EPS-Trägerklassen von Audioströmen, Videoströmen und Datenströmen sind:
i. WebRTC-basierte Audioströme sind QoS-Klassenkennungen, QCI, 1, zugeordnet
ii. WebRTC-basierte Videoströme sind QCI 2, Sprache, oder QCI 4, Nicht-Sprache zugeordnet,
iii. WebRTC-basierte Echtzeitspiele sind QCI 3 zugeordnet,
iv. WebRTC-basierte Datenströme sind QCI 5-9 zugeordnet, wobei das WebRTC-Gespräch aufgebaut wird, ohne QoS aufzubauen, und wobei die QoS erzwungen wird, nachdem das WebRTC-Gespräch aufgebaut worden ist.

2. Verfahren nach Anspruch 1 wobei ein Endpunkt des Kommunikationswegs eine Mehrpunktsteuereinheit, MCU, ist, die eine QoS-basierte Kommunikation mit mehreren WebRTC-fähigen Benutzerendgeräten, UEs, ermöglicht.

3. Verfahren nach Anspruch 2, wobei die Mehrfachkommunikationseinheit, MCU, außerdem durch geeignetes Transcodieren des Inhalts eine QoS-basierte Kommunikation mit Nicht-WebRTC-Clients ermöglicht.

4. System, um eine Dienstqualität, QoS, für eine IMS-basierte Web-Echtzeitkommunikation, WebRTC, in Evolved Packet System-Netzwerk zu erzwingen, wobei das System aufweist:
a) eine Web-Anwendung, die durch eine periodische und ereignisbasierte Analyse einer QoS-relevanten Statistik der aktiven Sitzung eine Dienstqualitätskenntnis aufweist,
b) eine eP-CSCF*, die eine modifizierte verbesserte Proxy-Aufrufsitzungssteuerungsfunktion, eP-CSCF, ist, die konfiguriert ist, die QoS-relevanten Informationen in adäquate Sitzungseinleitungsprotokoll-, SIP, Signalisierungsmeldungen an die IP-Multimedia-Subsystem-, IMS, Kernkomponenten abzubilden, und
c) eine WebRTC-QoS Signalisierungsfunktion, WQSF, die konfiguriert ist, als ein Sitzungseinleitungsprotokoll-Anwendungsserver, SIP AS, mit einer eingebetteten Anwendungsfunktion, AF, zu dienen, die es der Anwendung anbietet, eine Richtlinien- und Vergütungssteuerung, PCC, auf der Netzwerkseite anzufordern,
d) die Abbildungsregelungen zum Aufbauen möglicher dedizierter EPS-Trägerklassen von Audioströmen, Videoströmen und Datenströmen sind:
i. WebRTC-basierte Audioströme sind QoS-Klassenkennungen, QCI 1, zugeordnet,
ii. WebRTC-basierte Videoströme sind QCI 2, Sprache, oder QCI 4, Nicht-Sprache zugeordnet,
iii. WebRTC-basierte Echtzeitspiele sind QCI 3 zugeordnet,
iv. WebRTC-basierte Datenströme sind QCI 5-9 zugeordnet, wobei das WebRTC-Gespräch aufgebaut wird, ohne QoS aufzubauen, und wobei die QoS erzwungen wird, nachdem das WebRTC-Gespräch aufgebaut worden ist.

5. System nach Anspruch 4, wobei ein Endpunkt des Kommunikationswegs eine Mehrpunktsteuereinheit (MCU) ist, die konfiguriert ist, eine QoS-basierte Kommunikation mit mehreren WebRTC-fähigen UEs zu ermöglichen.

6. System nach Anspruch 5 wobei die Mehrfachkommunikationseinheit, MCU, außerdem konfiguriert ist, durch geeignetes Transcodieren des Inhalts eine QoS-basierte Kommunikation mit Nicht-WebRTC-Clients zu ermöglichen.

## Revendications

1. Procédé pour effectuer la qualité de service, QoS, pour une communication en temps réel par Internet basée sur IMS, WebRTC, dans un réseau de système par paquets évolué, ledit procédé comprenant :
a) une application Web incluant une reconnaissance de qualité de service par analyse périodique et basée sur des événements de statistiques de session active pertinentes pour la QoS,
b) une eP-CSCF* qui est une fonction proxy de commande de session d'appel, eP-CSCF, modifiée et améliorée, prévue pour mapper les informations pertinentes pour la QoS en messages de signalisation adéquats de protocole d'ouverture de session, SIP, vers les composants essentiels de l'IP multimédia subsystem, IMS, et
c) une fonction de signalisation de QoS WebRTC, WQSF, fonctionnant comme un serveur d'application de protocole d'ouverture de session, SIP AS, avec une fonction d'application, AF, intégrée qui propose à l'application de demander une commande de politique et de facturation, PCC, sur le côté réseau,
d) les règles de mappage pour établir des classes de porteuses EPS dédiées réalisables pour les flux audio, les flux vidéo et les flux de données sont :
i. les flux audio basés WebRTC sont liés aux identifiants de classe QoS, QCI, 1,
ii. les flux vidéo basés WebRTC sont liés aux QCI 2, conversationnels, ou QCI 4, non-conversationnels,
iii. les jeux en temps réel basés WebRTC sont liés aux QCI 3,
iv. les flux de données basés WebRTC sont liés aux QCI 5-9,
la conversation WebRTC étant établie sans établir la QoS, et la QoS étant effectuée après établissement de la conversation WebRTC.

2. Procédé selon la revendication 1, où un point terminal du trajet de communication est une unité de commande multipoint, MCU, permettant une communication basée QoS vers plusieurs équipement d'utilisateur, UEs, compatibles WebRTC.

3. Procédé selon la revendication 2, où l'unité de communication multipoint, MCU, permet également une communication basée QoS vers des clients non-WebRTC par transcodage approprié de contenu.

4. Système pour effectuer la qualité de service, QoS, pour une communication en temps réel par Internet basée sur IMS, WebRTC, dans un réseau de système par paquets évolué, ledit système comprenant :
a) une application Web incluant une reconnaissance de qualité de service par analyse périodique et basée sur des événements de statistiques de session active pertinentes pour la QoS,
b) une eP-CSCF* qui est une fonction proxy de commande de session d'appel eP-CSCF, modifiée et améliorée, prévue pour mapper les informations pertinentes pour la QoS en messages de signalisation adéquats de protocole d'ouverture de session, SIP, vers les composants essentiels de l'IP multimédia subsystem, IMS, et
c) une fonction de signalisation de QoS WebRTC, WQSF, prévue pour fonctionner comme un serveur d'application de protocole d'ouverture de session, SIP AS, avec une fonction d'application, AF, intégrée qui propose à l'application de demander une commande de politique et de facturation, PCC, sur le côté réseau,
d) les règles de mappage pour établir des classes de porteuses EPS dédiées réalisables pour les flux audio, les flux vidéo et les flux de données sont :
i. les flux audio basés WebRTC sont liés aux identifiants de classe QoS, QCI, 1,
ii. les flux vidéo basés WebRTC sont liés aux QCI 2, conversationnels, ou QCI 4, non-conversationnels,
iii. les jeux en temps réel basés WebRTC sont liés aux QCI 3,
iv. les flux de données basés WebRTC sont liés aux QCI 5-9,
la conversation WebRTC étant établie sans établir la QoS, et la QoS étant effectuée après établissement de la conversation WebRTC.

5. Système selon la revendication 4, où un point terminal du trajet de communication est une unité de commande multipoint (MCU), prévue pour permettre une communication basée QoS vers plusieurs UEs compatibles WebRTC.

6. Système selon la revendication 5, où l'unité de communication multipoint, MCU, est également prévue pour permettre une communication basée QoS vers des clients non-WebRTC par transcodage approprié de contenu.
